# EUROPEAN PATENT SPECIFICATION

(11) **EP 1 428 108 B1**
(45) Date of publication and mention of the grant of the patent: **13.02.2013**
(21) Application number: 02769535.2
(22) Date of filing: 14.05.2002
(51) Int. Cl.: G10H 1/00, G06F 3/01, H04N 21/422

(54) **DEVICE FOR INTERACTING WITH REAL-TIME STREAMS OF CONTENT**
GERÄT ZUR INTERAKTIVEN BETRACHTUNG VON ECHTZEIT-INHALTSSTROMEN
PROCEDE DESTINE A INTERAGIR AVEC DES FLUX DE CONTENU EN TEMPS REEL

(30) Priority: 14.05.2001 EP 01201799
(43) Date of publication of application: 16.06.2004
(73) Proprietor: Koninklijke Philips Electronics N.V., 5621 BA Eindhoven (NL)
(72) Inventor: STIENSTRA, Marcelle, A., NL-5656 AA Eindhoven (NL)
(74) Representative: Verweij, Petronella Danielle
(86) International application number: PCT/IB2002/001666
(87) International publication number: WO 2002/093344

(56) References cited:
- EP-A- 0 654 779
- US-A- 4 569 026
- US-A- 5 442 168

## Description

The present invention relates to a system and method for receiving and displaying real-time streams of content. Specifically, the present invention enables a user to interact with and personalize the displayed real-time streams of content.

Storytelling and other forms of narration have always been a popular form of entertainment and education. Among the earliest forms of these are oral narration, song, written communication, theater, and printed publications. As a result of the technological advancements of the nineteenth and twentieth century, stories can now be broadcast to large numbers of people at different locations. Broadcast media, such as radio and television, allow storytellers to express their ideas to audiences by transmitting a stream of content, or data, simultaneously to end-user devices that transforms the streams for audio and/or visual output.

Such broadcast media are limited in that they transmit a single stream of content to the end-user devices, and therefore convey a story that cannot deviate from its predetermined sequence. The users of these devices are merely spectators and are unable to have an effect on the outcome of the story. The only interaction that a user can have with the real-time streams of content broadcast over television or radio is switching between streams of content, i.e., by changing the channel. It would be advantageous to provide users with more interaction with the storytelling process, allowing them to be creative and help determine how the plot unfolds according to their preferences, and therefore make the experience more enjoyable.

At the present time, computers provide a medium for users to interact with real-time streams of content. Computer games, for example, have been created that allow users to control the actions of a character situated in a virtual environment, such as a cave or a castle. A player must control his/her character to interact with other characters, negotiate obstacles, and choose a path to take within the virtual environment. In on-line computer games, streams of real-time content are broadcast from a server to multiple personal computers over a network, such that multiple players can interact with the same characters, obstacles, and environment. While such computer games give users some freedom to determine how the story unfolds (i.e., what happens to the character), the story tends to be very repetitive and lacking dramatic value, since the character is required to repeat the same actions (e.g. shooting a gun), resulting in the same effects, for the majority of the game's duration.

Various types of children's educational software have also been developed that allows children to interact with a storytelling environment on a computer. For example, LivingBooks® has developed a type of "interactive book" that divides a story into several scenes, and after playing a short animated clip for each scene, allows a child to manipulate various elements in the scene (e.g., "point-and-click" with a mouse) to play short animations or gags. Other types of software provide children with tools to express their own feelings and emotions by creating their own stories. In addition to having entertainment value, interactive storytelling has proven to be a powerful tool for developing the language, social, and cognitive skills of young children.

However, one problem associated with such software is that children are usually required to using either a keyboard or a mouse in order to interact. Such input devices must be held in a particular way and require a certain amount of hand-eye coordination, and therefore may be very difficult for younger children to use. Furthermore, a very important part of the early cognitive development of children is dealing with their physical environment. An interface that encourages children to interact by "playing" is advantageous over the conventional keyboard and mouse interface, because it is more beneficial from an educational perspective, it is more intuitive and easy to use, and playing provides a greater motivation for children to participate in the learning process. Also, an interface that expands the play area (i.e., area in which children can interact), as well as allowing children to interact with objects they normally play with, can encourage more playful interaction.

ActiMates™ Barney™ is an interactive learning product created by Microsoft Corp.®, which consists of a small computer embedded in an animated plush doll. A more detailed description of this product is provided in the paper, E. Strommen, "When the Interface is a Talking Dinosaur: Learning Across Media with ActiMates Barney," Proceedings of CHI '98, pages 288-295. Children interact with the toy by squeezing the doll's hand to play games, squeezing the doll's toe to hear songs, and covering the doll's eyes to play "peek-a-boo." ActiMates™ Barney™ can also receive radio signals from a personal computer and coach children while they play educational games offered by ActiMates™ software. While this particular product fosters interaction among children, the interaction involves nothing more than following instructions. The doll does not teach creativity or collaboration, which are very important in the developmental learning, because it does not allow the child to control any of the action.

CARESS (Creating Aesthetically Resonant Environments in Sound) is a project for designing tools that motivate children to develop creativity and communication skills by utilizing a computer interface that converts physical gestures into sound. The interface includes wearable sensors that detect muscular activity and are sensitive enough to detect intended movements. These sensors are particularly useful in allowing physically challenged children to express themselves and communicate with others, thereby motivating them to participate in the learning process. However, the CARESS project does not contemplate an interface that allows the user any type of interaction with streams of content.

In US4569026A actors and cartoon characters reply responsively with lip-sync sound to words spoken by viewers. Different audio and video frames are generated from a videodisc and data memory to provide one of several alternative replies or alternative actions at each branch point in the game, depending on what the viewer says to a speech-recognition unit. A menu of prompting words is displayed on a hand-held unit to inform viewers of what words they can use at each branch point. However, no movements or types of movements are being detected for controlling the game.

US5442168 discloses a controller that includes a light emitting diode for emitting radiation to a laterally distributed discrete volume of space above a single source of radiation with a sensor receiving the radiation from the single source. The radiation is reflected from an object that is positioned within the volume of space to provide a sensor signal from which is determined the relative position of the object and a control signal is generated representative of the object position. This construction is, however, very limited in determining different types of movement. It can basically only recognize that there is a movement, and only if it occurs within said volume of space.

EP-654779 relates to a multimedia system for control and generation of music and animation. The system includes a sensor for detecting movement. A unit acquires and processes data detected by the sensor. Sound generation, image generation, image control, and light effects control units are all operated by the data processing unit. The sensors may be of thermal infrared, ultrasonic, laser, electromagnetic, or mechanical sensors, or an image acquisition system. The sensors are placed on the ceiling, floor, or walls. This arrangement is not capable of determining different types of movement; it merely recognizes a movement.

It is an object of the invention to provide a user interface which alleviates the above-mentioned problems. This object is achieved according to independent claim 1. This construction allows for determining a type of movement corresponding to the detected movement by analyzing a detection signal from the movement sensor; the type of movement being different facial expressions or hand gestures made by a user, a gesture that imitates the use of a device or a tool, or an amount of force or speed with which the user makes a gesture. The present invention thus provides a user interface for the end-user device that allows users to interact with the real-time streams of content in a simple, direct, and intuitive manner. The interface provides users with physical, as well as mental, stimulation while interacting with real-time streams of content.

Further objects of the present invention are to alleviate the above-mentioned problems by providing a process in a system for transforming streams of content into a presentation to be output, and a system, respectively. These objects are achieved by the independent claims 7 and 10.

Embodiments of the present invention are defined in the dependent claims.

These and other embodiments of the present invention will become apparent from and elucidated with reference to the following detailed description considered in connection with the accompanying drawings.

It is to be understood that these drawings are designed for purposes of illustration only and not as a definition of the limits of the invention for which reference should be made to the appending claims.
Fig. 1 is a block diagram illustrating the configuration of a system for transforming real-time streams of content into a presentation.
Fig. 2 illustrates the user interface of the present invention according to an exemplary embodiment.
Figs. 3A and 3B illustrate a top view and a side view, respectively, of the user interface.
Fig. 4 is a flowchart illustrating the method whereby real-time streams of content can be transformed into a narrative.

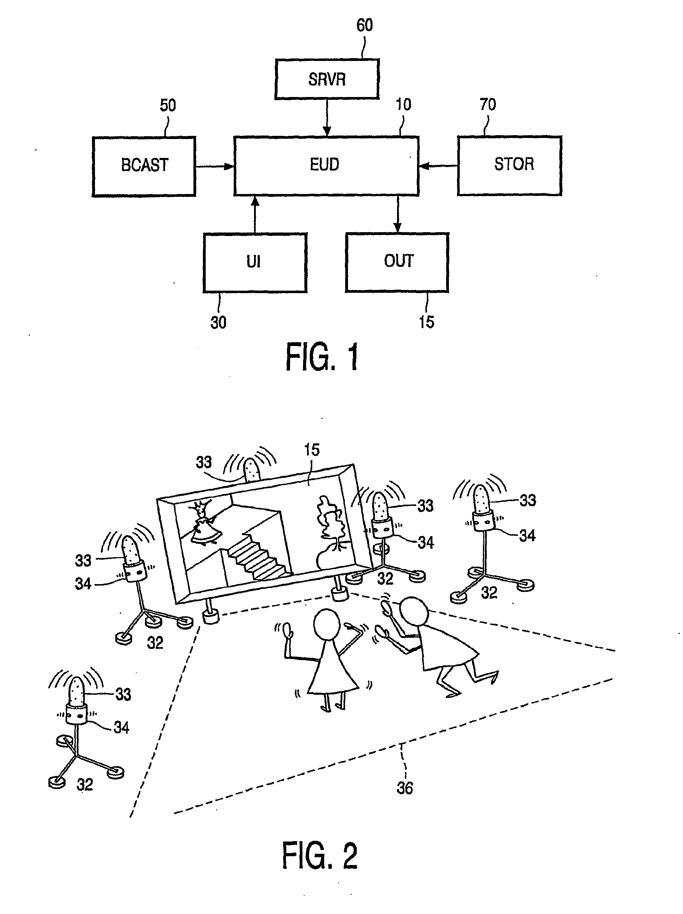

Referring to the drawings, Fig. 1 shows a configuration of a system for transforming real-time streams of content into a presentation, according to an exemplary embodiment of the present invention. An end-user device 10 receives real-time streams of data, or content, and transforms the streams into a form that is suitable for output to a user on output device 15. The end-user device 10 can be configured as either hardware, software being executed on a microprocessor, or a combination of the two. One possible implementation of the end-user device 10 and output device 15 of the present invention is as a set-top box that decodes streams of data to be sent to a television set. The end-user device 10 can also be implemented in a personal computer system for decoding and processing data streams to be output on the CRT display and speakers of the computer. Many different configurations are possible, as is known to those of ordinary skill in the art.

The real-time streams of content can be data streams encoded according to a standard suitable for compressing and transmitting multimedia data, for example, one of the Moving Picture Experts Group (MPEG) series of standards. However, the real-time streams of content are not limited to any particular data format or encoding scheme. As shown in Fig. 1, the real-time streams of content can be transmitted to the end-user device over a wire or wireless network, from one of several different external sources, such as a television broadcast station 50 or a computer network server. Alternatively, the real-time streams of data can be retrieved from a data storage device 70, e.g. a CD-ROM, floppy-disc, or Digital Versatile Disc (DVD), which is connected to the end-user device.

As discussed above, the real-time streams of content are transformed into a presentation to be communicated to the user via output device 15. In an exemplary embodiment of the present invention, the presentation conveys a story, or narrative, to the user. Unlike prior art systems that merely convey a story whose plot is predetermined by the real-time streams of content, the present invention includes a user interface 30 that allows the user to interact with a narrative presentation and help determine its outcome, by activating or deactivating streams of content associated with the presentation. For example, each stream of content may cause the narrative to follow a particular storyline, and the user determines how the plot unfolds by activating a particular stream, or storyline. Therefore, the present invention allows the user to exert creativity and personalize the narrative according to his/her own wishes. However, the present invention is not limited to transforming real-time streams of content into a narrative to be presented to the user. According to other exemplary embodiments of the present invention, the real-time streams can be used to convey songs, poems, musical compositions, games, virtual environments, adaptable images, or any other type of content with which the user can adapt according to his/her personal wishes.

As mentioned above, Fig. 2 shows in detail the user interface 30 according to an exemplary embodiment, which includes a plurality of sensors 32 distributed among a three-dimensional area in which a user interacts. The interaction area 36 is usually in close proximity to the output device 15. In an exemplary embodiment, each sensor 32 includes either a motion sensor 34 for detecting user movements or gestures, a sound-detecting sensor 33 (e.g., a microphone) for detecting sounds made by a user, or a combination of both a motion sensor 34 and a sound-detecting sensor 33 (Fig. 2 illustrates sensors 32 that include such a combination).

The motion sensor 34 may comprise an active sensor that injects energy into the environment to detect a change caused by motion. One example of an active motion sensor comprises a light beam that is sensed by a photosensor. The photosensor is capable of detecting a person or object moving across, and thereby interrupting, the light beam by detecting a change in the amount of light being sensed. Another type of active motion sensor uses a form of radar. This type of sensor sends out a burst of microwave energy and waits for the reflected energy to bounce back. When a person comes into the region of the microwave energy, the sensor detects a change in the amount of reflected energy or in the time it takes for the reflection to arrive. Other active motion sensors similarly use reflected ultrasonic sound waves to detect motion.

Alternatively, the motion sensor 34 may comprise a passive sensor, which detects infrared energy being radiated from a user. Such devices are known as PIR detectors (Passive InfraRed) and are designed to detect infrared energy having a wavelength between 9 and 10 micrometers. This range of wavelength corresponds to the infrared energy radiated by humans. Movement is detected according to a change in the infrared energy being sensed, caused by a person entering or exiting the field of detection. PIR sensors typically have a very wide angle of detection (up to, and exceeding, 175 degrees).

Of course, other types of motion sensors may be used in the user interface 30, including wearable motion sensors and video motion detectors. Wearable motion sensors may include virtual reality gloves, sensors that detect electrical activity in muscles, and sensors that detect the movement of body joints. Video motion detectors detect movement in images taken by a video camera. One type of video motion detector detects sudden changes in the light level of a selected area of the images to detect movement. More sophisticated video motion detectors utilize a computer running image analysis software. Such software may be capable of differentiating between different facial expressions or hand gestures made by a user.

The user interface 30 may incorporate one or more of the motion sensors described above, as well as any other type of sensor that detects movement that is known in the art.

The sound-detecting sensor 33 may include any type of transducer for converting sound waves into an electrical signal (such as a microphone). The electrical signals picked up by the sound sensors can be compared to a threshold signal to differentiate between sounds made by a user and environmental noise. Further, the signals may be amplified and processed by an analog device or by software executed on a computer to detect sounds having particular frequency pattern. Therefore, the sound-detecting sensor 34 may differentiate between different types of sounds, such as stomping feet and clapping hands.

The sound-detecting sensor 33 may include a speech recognition system for recognizing certain words spoken by a user. The sound waves may be converted into amplified electrical signals that are processed by an analog speech recognition system, which is capable of recognizing a limited vocabulary of words; else, the converted electrical signals may be digitized and processed by speech recognition software, which is capable of recognizing a larger vocabulary of words.

The sound-detecting sensor 33 may comprise one of a variety of embodiments and modifications, as is well known to those skilled in the art. According to an exemplary embodiment, the user interface 30 may incorporate one or more sound-detecting sensors 34 taking on one or more different embodiments.

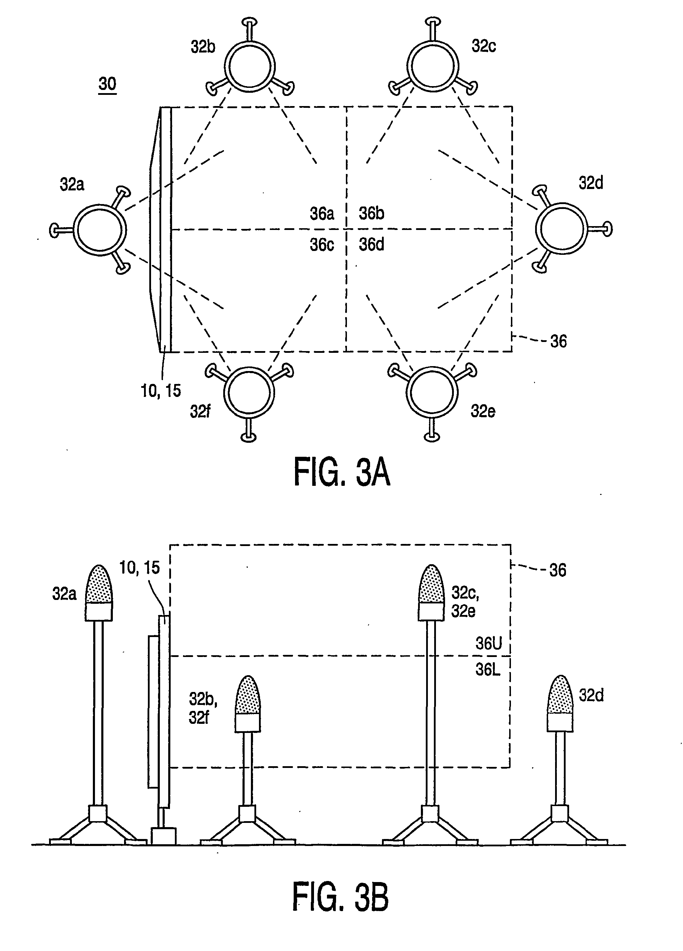

Figs. 3A and 3B illustrate an exemplary embodiment of the user interface 30, in which a plurality of sensors 32a-fthat are positioned around an interactive area 36, in which a user interacts. The sensors 32a-f are positioned so that the user interface 30 not only detects whether or not a movement or sound has been made by the user within interaction area 36, but also determines a specific location in interaction area 36 that the movement or sound was made. As shown in Figs. 3A and 3B, the interaction area 36 can be divided into a plurality of areas in three-dimensions. Specifically, Fig. 3A illustrates an overhead view of the user interface 30, where the two-dimensional plane of the interaction area 36 is divided into quadrants 36a-d. Fig. 3B illustrates a side view of the user interface 30, where the interaction area is further divided according to a third dimension (vertical) into areas 36U and 36L. In the embodiment shown in Figs. 3A and 3B, the interaction area 36 can divided into eight three-dimensional areas: (36a, 36U), (36a, 36L), (36b, 36U), (36b, 36L), (36c, 36U), (36c, 36L), (36d, 36U), and (36d, 36L).

According to this embodiment, the user-interface 30 is able to determine a three-dimensional location in which a movement or sound is detected, because multiple sensors 32a-f are positioned around the interaction area 36. Figure 32A shows that sensors 32a-f are positioned such that a movement or sound made in quadrants 36a or 36c will produce a stronger detection signal in sensors 32a, 32b, and 32f than in sensors 32c, 32d, and 32e. Likewise, a sound or movement made in quadrants 36c or 36d will produce a stronger detection signal in sensors 32f and 32e than in sensors 32b and 32c.

Figure 3B also shows that sensors 32a-f have located at various elevations. For example, sensors 32b, 32f, and 32d will more strongly detect a movement or noise made close to the ground than will sensors 32a, 32c, and 32e.

The user interface 30 can therefore determine in which three-dimensional area the movement or sound was made based on the position of each sensor, as well as the strength the signal generated by the sensor. As an example, an embodiment in which sensors 32a-f each contain a PIR sensor will be described below in connection with Figs. 3A and 3B.

When a user waves his hand in location (36b, 36U), each PIR sensor 34 of sensors 32a-f may detect some amount change in the infrared energy sensed. However, the PIR sensor of sensor 32c will sense the greatest amount of change because of its proximity to the movement. Therefore, sensor 32c will output the strongest detection signal, and the user-interface can determine the three-dimensional location in which the movement was made, by determining which three-dimensional location is closest to sensor 32c.

Similarly, the location of sounds made by users in the interaction area 36 can determined according to the respective locations and magnitude of detection signals output by the sound-detecting sensors 33 in sensors 32a-f.

Figs. 3A and 3B shows an exemplary embodiment and should not be construed as limiting the present invention. According to another exemplary embodiment, the user-interface 30 may include a video motion detector that includes image-processing software for analyzing the video image to determine the type and location of movement within an interaction area 36. In another exemplary embodiment, the user interface may also comprise a grid of piezoelectric cables covering the floor of the interaction area 36 that senses the location and force of footsteps made by a user.

In an exemplary embodiment, the end-user device 10 determines which streams of content should be activated or deactivated in the presentation, based on the type of movements and/or sounds detected by the user interface 30. In this embodiment, each stream of content received by the end-user device may include control data that links the stream to a particular gesture or movement. For example, the stomping of feet may be linked to a stream of content that causes a character in the narrative to start walking or running. Similarly, a gesture that imitates the use of a device or tool (e.g. a scooping motion for using a shovel) may be linked to a stream that causes the character to use that device or tool.

In a further exemplary embodiment, a user can imitate a motion or a sound being output in connection with a particular activated stream of content, in order to deactivate the stream. Conversely, the user can imitate a motion or sound of a particular stream of content to select that stream for further manipulation by the user.

In another exemplary embodiment, a particular stream of content may be activated according to a specific word spoken or a specific type of sound made by one or more users. Similar to the previously described embodiment, each received stream of content may include control data for linking it to a specific word or sound. For example, by speaking the word of an action (e.g., "run"), a user may cause the character of a narrative to perform the corresponding action. By making a sound normally associated with an object, a user may cause that object to appear on a screen or to be used by a character. For example, by saying "pig" or "oink," the user may cause a pig to appear.

In another exemplary embodiment, the stream of content may include control data that links the stream to a particular location in which a movement or sound is made. For example, if a user wants a character to move in a particular direction, the user can point to the particular direction. The user interface 30 will determine the location that the user moved his/her hand to, and send the location information to the end-user device 10, which activates the stream of content that causes the character to move in the corresponding direction.

In another exemplary embodiment, the stream of content may include control data to link the stream to a particular movement or sound, and the end-user device 10 may cause the stream to be displayed at an on-screen location corresponding to the location where the user makes the movement or sound. For example, when a user practices dance steps, each step taken by the user may cause a footprint to be displayed on a screen location corresponding to the location of the actual step within the interaction area.

According to another exemplary embodiment, the user interface 30 determines not only the type of movement or sound made by the user, but also the manner in which the movement or sound was made. For example, the user interface can determine how loudly a user issues an oral command by analyzing the magnitude of the detected sound waves. Also, the user interface 30 may determine the amount of force or speed with which a user makes a gesture. For example, active motion sensors that measure reflected energy (e.g., radar) can detect the speed of movement. In addition, pressure based sensors, such as a grid of piezoelectric cables, can be used to detect the force of certain movements.

In the above embodiment, the manner in which a stream of content is output depends on the manner in which a user makes the movement or sound that activates the stream. For example, the loudness of a user's singing can be used to determine how long a stream remains visible on screen. Likewise, the force with which the user stomps his feet can be used to determine how rapidly a stream moves across the screen.

Another exemplary embodiment of the present invention, a stream of content is activated or deactivated according to a series or combination of movements and/or sounds. This embodiment can be implemented by including control data in a received stream that links the stream to a group of movements and/or sounds. Possible implementations of this embodiment include activating or deactivating a stream when the sensors 32 detect a set of movements and/or sound in a specific sequence or within a certain time duration.

According to another exemplary embodiment, control data may be provided with the real-time streams of content received at the end-user device 10 that automatically activates or deactivates certain streams of content. This allows the creator(s) of the real-time streams to have some control over what streams of content are activated and deactivated. In this embodiment, the author(s) of a narrative has a certain amount of control as to how the plot unfolds by activating or deactivating certain streams of content according to control data within the transmitted real-time streams of content.

In another exemplary embodiment of the present invention, when multiple users are interacting with the present invention at the same time, the user-interface 30 can differentiate between sounds or movements made by each user. Therefore, each user may be given the authority to activate or deactivate different streams of content by the end-user device. Sound-detecting sensors 33 may be equipped with voice recognition hardware or software that allows the user-interface to determine which user speaks a certain command. The user interface 30 may differentiate between movements of different users by assigning a particular section of the interaction area 36 to each user. Whenever a movement is detected at a certain location of the interaction area 36, the user interface will attribute the movement to the assigned user. Further, video motion detectors may include image analysis software that is capable of identifying a user that makes a particular movement.

In the above embodiment, each user may control a different character in an interactive narrative presentation. Control data within a stream of content may link the stream to the particular user to who may activate or deactivate it. Therefore, only the user who controls a particular character can activate or deactivate streams of content relating to that character.

In another exemplary embodiment, two or more streams of content activated by two or more different users may be combined into a single stream of content. For example, after each user activates a stream of content, they can combine the activated streams by issuing an oral command (e.g., "combine") or by making a particular movement (e.g., moving toward each other).

According to another exemplary embodiment, the user interface 30 may include one or more objects for user(s) to manipulate in order to activate or deactivate a stream. In this embodiment, a user causes the object to move and/or to make a particular sound, and the sensors 32 detect this movement and/or sound. For instance, the user will be allowed to kick or throw a ball, and the user interface 30 will determine the distance, direction, and/or velocity at which the ball traveled. Alternatively, the user may play a musical instrument, and the user interface will be able to detect the notes played by the user. Such an embodiment can be used to activate streams of content in a sports simulation game or in a program that teaches a user how to play a musical instrument.

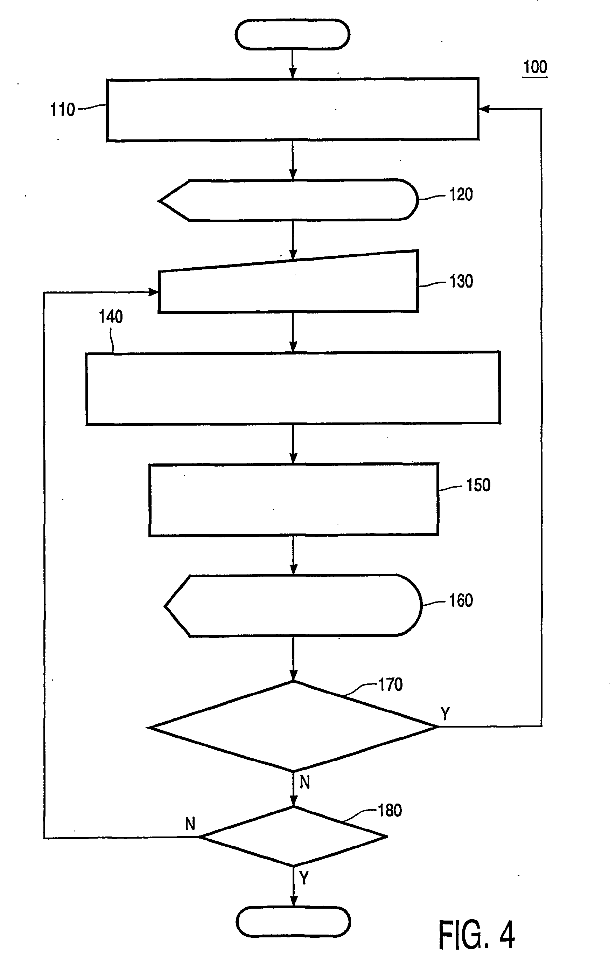

As described above, an exemplary embodiment of the present invention is directed to an end-user device that transforms real-time streams of content into a narrative that is presented to the user through output device 15. One possible implementation of this embodiment is an interactive television system. The end-user device 10 can be implemented as a set-top box, and the output device 15 is the television set. The process by which a user interacts with such a system is described below in connection with the flowchart 100 of Fig. 4.

In step 110, the end-user device 10 receives a stream of data corresponding to a new scene of a narrative and immediately processes the stream of data to extract scene data. Each narrative presentation includes a series of scenes. Each scene comprises a setting in which some type of action takes place. Further, each scene has multiple streams of content associated therewith, where each stream of content introduces an element that affects the plot.

For example, activation of a stream of content may cause a character to perform a certain action (e.g., a prince starts walking in a certain direction), cause an event to occur that affects the setting (e.g., thunderstorm, earthquake), or introduce a new character to the narrative (e.g., frog). Conversely, deactivation of a stream of content may cause a character to stop performing a certain action (e.g., prince stops walking), terminate an event (e.g., thunderstorm or earthquake ends), or cause a character to depart from the story (e.g. frog hops away).

The activation or deactivation of a stream of content may also change an internal property or characteristic of an object in the presentation. For example, activation of a particular stream may cause the mood of a character, such as the prince, to change from happy to sad. Such a change may become evident immediately in the presentation (e.g., the prince's smile becomes a frown), or may not be apparent until later in the presentation. Such internal changes are not limited to characters, and may apply to any object that is part of the presentation, which contains some characteristic or parameter that can be changed.

In step 120, the set-top box decodes the extracted scene data. The setting is displayed on a television screen, along with some indication to the user that he/she must determine how the story proceeds by interacting with user interface 30. As a result, the user makes a particular movement or sound in the interaction area 36, as shown in step 130.

In step 140, the sensors 32 detect the movement(s) or sound(s) made by the user, and make a determination as to the type of movement or sound made. This step may include determining which user made the sound or movement, when multiple users are in the interaction area 36. In step 150, the set-top box determines which streams of content are linked to the determined movement or sound. This step may include examining the control data of each stream of content to determine whether the detected movement or sound is linked to the stream.

In step 160, the new storyline is played out on the television according to the activated/deactivated streams of content. In this particular example, each stream of content is an MPEG file, which is played on the television while activated.

In step 170, the set-top box determines whether the activated streams of content necessarily cause the storyline to progress to a new scene. If so, the process returns to step 110 to receive the streams of content corresponding to the new scene. However, if a new scene is not necessitated by the storyline, the set-top box determines whether the narrative has reached a suitable ending point in step 180. If this is not the case, the user is instructed to use the user interface 30 in order to activate or deactivate streams of content and thereby continue the narrative. The flowchart of Fig. 4 and the corresponding description above is meant to describe an exemplary embodiment, and is in no way limiting.

The present invention provides a system that has many uses in the developmental education of children. The present invention promotes creativity and development of communication skills by allowing children to express themselves by interacting with and adapting a presentation, such as a story. The present invention does not include a user interface that may be difficult to use for younger children, such as a keyboard and mouse. Instead, the present invention utilizes a user interface 30 that allows for basic, familiar sounds and movements to be linked to specific streams of contents. Therefore, the child's interaction with the user interface 30 can be very "playful," providing children with more incentive to interact. Furthermore, streams of content can be linked with movements or sounds having a logical connection to the stream, thereby making interaction much more intuitive for children.

It should be noted, however, that the input device 30 of the present invention is in no way limited in its use to children, nor is it limited to educational applications. The present invention provides an intuitive and stimulating interface to interact with many different kinds of presentations geared to users of all ages.

A user can have a variety of different types of interactions with the presentation by utilizing the present invention. As mentioned above, the user may affect the outcome of a story by causing characters to perform certain types actions or by initiating certain events that affect the setting and all of the characters therein, such as a natural disaster or a weather storm. The user interface 30 can also be used to merely change details within the setting, such as changing the color of a building or the number of trees in a forest. However, the user is not limited to interacting with presentations that are narrative by nature. The user interface 30 can be used to choose elements to be displayed in a picture, to determine the lyrics to be used in a song or poem, to play a game, to interact with a computer simulation, or to perform any type of interaction that permits self-expression of a user within a presentation. Furthermore, the presentation may comprise a tutoring program for learning physical skills (e.g., learn how to dance or swing a golf club) or verbal skills (e.g., learn how to speak a foreign language or how to sing), in which the user can practice these skills and receive feedback from the program.

In addition, the user interface 30 of the present invention is not limited to an embodiment comprising motion and sound-detecting sensors 32 that surround and detect movements within a specified area. The present invention covers any type of user interface in which the sensed movements of a user or object causes the activation or deactivation of streams of content. For example, the user interface 30 may include an object that contains sensors, which detect any type of movement or user manipulation of the object. The sensor signal may be transmitted from the object by wire or radio signals to the end-user device 10, which activates or deactivates streams of content as a result.

Furthermore, the present invention is not limited to detecting movements or sound made by a user in a specified interaction area 30. The present invention may comprise a sensor, such as a Global Positioning System (GPS) receiver, that tracks its own movement. In this embodiment, the present invention may comprise a portable end-user device 10 that activates received streams of content in order to display real-time data, such as traffic news, weather report, etc., corresponding to its current location.

The present invention has been described with reference to the exemplary embodiments. As will be evident to those skilled in the art, various modifications of this invention can be made or followed in light of the foregoing disclosure without departing from the scope of the claims.

## Claims

1. A user interface (30) for interacting with a device that receives and transforms streams of content into a presentation to be output, comprising:
at least one sensor (32) for detecting a movement made by a user positioned in an interaction area (36) proximate to a location at which the presentation is output, wherein said sensor (32) is arranged to be aimed towards said interaction area (36),
wherein a type of movement corresponding to said detected movement is determined by analyzing a detection signal from said at least one sensor (32), and
wherein the type of movement is different facial expressions or hand gestures made by the user, a gesture that imitates the use of a device or a tool, or an amount of force or speed with which the user makes a gesture, and
wherein the presentation is controlled by manipulating one or more streams of content based on said determined type of movement, and a received stream of content is activated or deactivated in the presentation based on the determined type of movement.

2. The user interface (30) according to claim 1, wherein each stream of content includes control data that links the stream to a particular gesture.

3. The user interface (30) according to claim 1 or 2, wherein said manipulated streams of content correspond to parts of a narrative.

4. The user interface (30) according to claim 1, wherein said at least one sensor (32) includes a plurality of sensors, and
wherein detection signals from said plurality of sensors are analyzed to determine a location within said interaction area (36) in which said detected movement occurs.

5. The user interface (30) according to claim 4, wherein a received stream of content is activated or deactivated in the presentation based on said determined location.

6. The user interface (30) according to claim 1, wherein said presentation includes a narrative.

7. A process in a system for transforming streams of content into a presentation to be output, comprising:
detecting by means of at least one sensor (32) a movement made by a user which is positioned in an interaction area (36) proximate to a location at which the presentation is output, wherein said sensor (32) is arranged to be aimed towards said interaction area (36),
wherein a type of movement corresponding to said detected movement is determined by analyzing a detection signal; and
wherein the type of movement is different facial expressions or hand gestures made by the user, a gesture that imitates the use of a device or a tool, or an amount of force or speed with which a user makes the gesture, and
wherein the presentation is controlled by manipulating one or more streams of content based on said determined movement, and a received stream of content is activated or deactivated in the presentation based on the determined type of movement.

8. The process according to claim 7, wherein each stream of content includes control data that links the stream to a particular gesture.

9. The process according to claim 7 or 8, wherein said manipulated streams of content correspond to parts of a narrative.

10. A system comprising:
an end-user device (10) for receiving and transforming streams of content into a presentation; and
an output device (15) for outputting said presentation **characterized in that** it further comprises
a user interface (30) including at least one sensor (32) for detecting a movement made by a user which is positioned in an interaction area (36) proximate to the output device (15), wherein said sensor (32) is arranged to be aimed towards said interaction area (36);
wherein a type of movement corresponding to said detected movement is determined by analyzing a detection signal from said sensor (32); and
wherein the type of movement is different facial expressions or hand gestures made by the user, a gesture that imitates the use of a device or a tool, or an amount of force or speed with which the user makes a gesture, and
wherein said end-user device (10) manipulates said transformed streams of content based on said determined type of movement, thereby controlling said presentation, and a received stream of content is activated or deactivated in the presentation based on the determined type of movement.

11. The system according to claim 10, wherein each stream of content includes control data that links the stream to a particular gesture.

12. The system according to claim 10 or 11, wherein said manipulated streams of content correspond to parts of a narrative.

## Patentansprüche

1. Benutzerschnittstelle (30) zum Zusammenwirken mit einer Anordnung, die Inhaltsströme empfängt und diese zu einer auszugebenden Präsentation umwandelt, wobei diese Schnittstelle Folgendes umfasst:
wenigstens einen Sensor (32) zum Detektieren einer Bewegung, die ein Benutzer macht, der sich in einem Interaktionsgebiet (36) in der Nähe einer Stelle befindet, wo die Präsentation ausgegeben wird, wobei der genannte Sensor (32) dazu vorgesehen ist, auf das genannte Interaktionsgebiet (36) gerichtet zu werden,
wobei ein Bewegungstyp, welcher der genannten detektierten Bewegung entspricht, durch Analyse eines Detektionssignals aus dem genannten wenigstens einen Sensor (32), bestimmt wird, und
wobei der Bewegungstyp andere vom Benutzer gemachte Gesichtsausdrücke oder Handgebärden, eine Gebärde, welche die Verwendung einer Vorrichtung oder eines Werkzeugs oder eine Kraftmenge oder Geschwindigkeit, mit der ein Benutzer eine Gebärde macht, umfasst und
wobei die Präsentation durch Manipulation eines Inhaltsstromes oder mehrerer Inhaltsströme auf Basis des genannten bestimmten Bewegungstyps gesteuert wird, und ein empfangener Inhaltsstrom in der Präsentation auf Basis des bestimmten Bewegungstyps aktiviert oder deaktiviert wird.

2. Benutzerschnittstelle (30) nach Anspruch 1, wobei jeder Inhaltsstrom Steuerdaten enthalt, die den Strom mit einer bestimmten Gebärde koppeln.

3. Benutzerschnittstelle (30) nach Anspruch 1 oder 2, wobei die genannten manipulierten Inhaltsströme Teilen einer Erzählung entsprechen.

4. Benutzerschnittstelle (30) nach Anspruch 1, wobei der genannte wenigstens eine Sensor (32) eine Anzahl Sensoren umfasst, und
wobei Detektionssignale aus den genannten Sensoren zum Bestimmen einer Stelle innerhalb des genannten Interaktionsgebietes (36), wo die genannte detektierte Bewegung durchgeführt wird, analysiert werden.

5. Benutzerschnittstelle (30) nach Anspruch 4, wobei ein empfangener Inhaltsstrom in der Präsentation auf Basis der genannten bestimmten Stelle aktiviert oder deaktiviert wird.

6. Benutzerschnittstelle (30) nach Anspruch 1, wobei die genannte Präsentation eine Erzählung enthält.

7. Prozess in einem System zum Transformieren von Inhaltsströmen zu einer auszugebenden Präsentation, wobei dieser Prozess Folgendes umfasst:
das Detektieren mittels wenigstens eines Sensors (32) einer Bewegung, die ein Benutzer macht, der sich in einem Interaktionsgebiet (36) in der Nähe einer Stelle befindet, wo die Präsentation ausgegeben wird, wobei der genannte Sensor (32) dazu vorgesehen ist, auf das genannte Interaktionsgebiet (36) gerichtet zu werden,
wobei ein Bewegungstyp, welcher der genannten detektierten Bewegung entspricht, durch Analyse eines Detektionssignals bestimmt wird, und
wobei der Bewegungstyp andere vom Benutzer gemachte Gesichtsausdrücke oder Handgebärden, eine Gebärde, welche die Verwendung einer Vorrichtung oder eines Werkzeugs oder eine Kraftmenge oder Geschwindigkeit, mit der ein Benutzer eine Gebärde macht, umfasst und
wobei die Präsentation durch Manipulation eines Inhaltsstromes oder mehrerer Inhaltsströme auf Basis des genannten bestimmten Bewegungstyps gesteuert wird, und ein empfangener Inhaltsstrom in der Präsentation auf Basis des bestimmten Bewegungstyps aktiviert oder deaktiviert wird.

8. Prozess nach Anspruch 7, wobei jeder Inhaltsstrom Steuerdaten enthält, die den Strom mit einer bestimmten Gebärde koppeln.

9. Prozess nach Anspruch 7 oder 8, wobei die manipulierten Inhaltsströme Teilen einer Erzählung entsprechen.

10. System, das Folgendes umfasst:
eine Endbenutzeranordnung (10) zum Empfangen und Transformieren von Inhaltsströmen zu einer Präsentation. Und
eine Ausgabeanordnung (15) zum Ausgeben der genannten Präsentation, **dadurch gekennzeichnet, dass** das System weiterhin Folgendes umfasst:
eine Benutzerschnittstelle (30) mit wenigstens einem Sensor (32) zum Detektieren einer Bewegung, die ein Benutzer macht, der sich in einem Interaktionsgebiet (36) in der Nähe einer Stelle befindet, wo die Präsentation ausgegeben wird, wobei der genannte Sensor (32) dazu vorgesehen ist, auf das genannte Interaktionsgebiet (36) gerichtet zu werden,
wobei ein Bewegungstyp, welcher der genannten detektierten Bewegung entspricht, durch Analyse eines Detektionssignals aus dem genannten wenigstens einen Sensor (32), bestimmt wird, und
wobei der Bewegungstyp andere vom Benutzer gemachte Gesichtsausdrücke oder Handgebärden, eine Gebärde, welche die Verwendung einer Vorrichtung oder eines Werkzeugs oder eine Kraftmenge oder Geschwindigkeit, mit der ein Benutzer eine Gebärde macht, umfasst und
wobei die genannte Endbenutzeranordnung (10) die genannten transformierten Inhaltsströme auf Basis des bestimmten Bewegungstyps manipuliert, wodurch die genannte Präsentation gesteuert wird und ein empfangener Inhaltsstrom in der Präsentation auf Basis des bestimmten Bewegungstyps aktiviert oder deaktiviert wird.

11. System nach Anspruch 10, wobei jeder Inhaltsstrom Steuerdaten enthält, die den Strom mit einer bestimmten Gebärde koppeln.

12. System nach Anspruch 10 oder 11, wobei die genannten manipulierten Inhaltsströme Teilen einer Erzählung entsprechen.

## Revendications

1. Interface utilisateur (30) pour interagir avec un dispositif qui reçoit et transforme des flux de contenu en une représentation à être sortie, comprenant :
au moins un capteur (32) pour détecter un mouvement étant fait par un utilisateur qui est positionné dans une zone d'interaction (36) près d'un emplacement à l'endroit duquel la présentation sortie, dans laquelle ledit capteur (32) est agencé de manière à être orienté vers ladite zone d'interaction (36) ;
dans laquelle un type de mouvement qui correspond audit mouvement détecté est déterminé par l'analyse d'un signal de détection en provenance dudit au moins un capteur (32) ; et
dans laquelle le type de mouvement constitue des expressions faciales différentes ou des gestes de la main qui sont faits par l'utilisateur, un geste qui imite l'utilisation d'un dispositif ou d'un outil ou une quantité de force ou de vitesse avec laquelle l'utilisateur fait un geste ; et
dans laquelle la présentation est commandée par la manipulation d'un ou de plusieurs flux de contenu sur la base dudit type déterminé de mouvement et dans laquelle un flux reçu de contenu est activé ou est désactivé dans la présentation sur la base du type déterminé de mouvement.

2. Interface utilisateur (30) selon la revendication 1, dans laquelle chaque flux de contenu comprend des données de commande qui lient le flux à un geste particulier.

3. Interface utilisateur (30) selon la revendication 1 ou selon la revendication 2, dans laquelle lesdits flux manipulés de contenu correspondent à des parties d'une narration.

4. Interface utilisateur (30) selon la revendication 1, dans laquelle ledit au moins un capteur (32) comprend une pluralité de capteurs ; et
dans laquelle des signaux de détection en provenance de ladite pluralité de capteurs sont analysés pour déterminer un emplacement à l'intérieur de ladite zone d'interaction (36) dans laquelle ledit mouvement détecté se produit.

5. Interface utilisateur (30) selon la revendication 4, dans laquelle un flux reçu de contenu est activé ou est désactivé dans la présentation sur la base dudit emplacement déterminé.

6. Interface utilisateur (30) selon la revendication 1, dans laquelle ladite présentation comprend une narration.

7. Processus dans un système pour transformer des flux de contenu en une présentation à être sortie, comprenant l'étape suivante consistant à :
détecter au moyen d'au moins un capteur (32) un mouvement étant fait par un utilisateur qui est positionné dans une zone d'interaction (36) près d'un emplacement à l'endroit duquel la présentation est sortie où ledit capteur (32) est agencé de manière à être orienté vers ladite zone d'interaction (36) ;
dans laquelle un type de mouvement qui correspond audit mouvement détecté est déterminé par l'analyse d'un signal de détection ; et
dans laquelle le type de mouvement constitue des expressions faciales différentes ou des gestes de la main qui sont faits par l'utilisateur, un geste qui imite l'utilisation d'un dispositif ou d'un outil ou une quantité de force ou de vitesse avec laquelle un utilisateur fait le geste ; et
dans laquelle la présentation est commandée par la manipulation d'un ou de plusieurs flux de contenu sur la base dudit mouvement déterminé et dans laquelle un flux reçu de contenu est activé ou est désactivé dans la présentation sur la base du type déterminé de mouvement.

8. Processus selon la revendication 7, dans lequel chaque flux de contenu comprend des données de commande qui lient le flux à un geste particulier.

9. Processus selon la revendication 7 ou selon la revendication 8, dans lequel lesdits flux manipulés de contenu correspondent à des parties d'une narration.

10. Système comprenant :
un dispositif d'utilisateur final (10) pour recevoir et pour transformer des flux de contenu en une présentation ; et
un dispositif de sortie (15) pour sortir ladite présentation, **caractérisé en ce qu'**il comprend en outre :
une interface utilisateur (30) comprenant au moins un capteur (32) pour détecter un mouvement étant fait par un utilisateur qui est positionné dans une zone d'interaction (36) près du dispositif de sortie (15), dans laquelle ledit capteur (32) est agencé de manière à être orienté vers ladite zone d'interaction (36) ;
dans laquelle un type de mouvement qui correspond audit mouvement détecté est déterminé par l'analyse d'un signal de détection en provenance dudit capteur (32) ; et
dans laquelle le type de mouvement constitue des expressions faciales différentes ou des gestes de la main qui sont faits par l'utilisateur, un geste qui imite l'utilisation d'un dispositif ou d'un outil ou une quantité de force ou de vitesse avec laquelle l'utilisateur fait un geste ; et
dans laquelle ledit dispositif d'utilisateur final (10) manipule lesdits flux transformés de contenu sur la base dudit type déterminé de mouvement, de ce fait commandant ladite présentation, et dans laquelle un flux reçu de contenu est activé ou est désactivé dans la présentation sur la base du type déterminé de mouvement.

11. Système selon la revendication 10, dans lequel chaque flux de contenu comprend des données de commande qui lient le flux à un geste particulier.

12. Système selon la revendication 10 ou selon la revendication 11, dans lequel lesdits flux manipulés de contenu correspondent à des parties d'une narration.
